# EUROPÄISCHE PATENTANMELDUNG

(11) **EP 0 647 418 A2**
(43) Veröffentlichungstag der Anmeldung: **12.04.1995**
(21) Anmeldenummer: 94114336.4
(22) Anmeldetag: 13.09.1994
(51) Int. Cl.: A47B 47/00, F16B 12/40

(54) **Regalbausystem**

(30) Priorität: 07.10.1993 DE 9315567 U
(71) Anmelder: Schilbach, Jörg, D-22880 Wedel (DE)
(72) Erfinder: Schilbach, Jörg, D-22880 Wedel (DE)
(74) Vertreter: DIEHL GLAESER HILTL & PARTNER

(57) **Zusammenfassung**

Regalbausystem, aufweisend stabförmige Quadrat-Hohlprofilteile und sternförmige Knotenpunktelemente mit zwei bis sechs voneinander wegstehenden Zapfen, die in den Hohlprofilen zwecks Bildung von Regal-Raumgittern Aufnahme finden. Die Zapfen (12) der Knotenpunktelemente (10) sind als Zylinder mit einem Außendurchmesser (D) ausgebildet, der wenig größer als das Innenmaß (B) der Hohlprofilteile (11) ist. An den Zapfen (12) sind zwei oder vier diametral gegenüberliegende und über den Umfang gleichmäßig verteilte Abflachungen (30-34) ausgebildet, die paarweise zueinander einen Abstand (A) haben, der wenig kleiner als das Innenmaß (B) der Hohlprofilteile ist.

## Beschreibung

Die Erfindung bezieht sich auf ein Regalbausystem, aufweisend stabförmige Verbindungselemente, die mindestens im Bereich ihrer Enden mit je einem Quadrat-Hohlprofil ausgebildet sind, und aufweisend Knotenpunktelemente mit zwei, drei, vier, fünf oder sechs vorstehenden Zapfen, die in den Hohprofilteilen zwecks Verbindung von Stäben in gewünschter Zahl und Weise zur Bildung von Regal-Raumgittern Aufnahme finden.

Derartige Regalbausysteme sind in verschiedenen Ausführungsformen bekannt. Bei einer dieser Ausführungsformen sind die Zapfen etwas konisch auslaufend und in Vierkantform ausgeführt, so daß man mit einem geeigneten Werkzeug die Hohlprofile der Verbindungselemente auf die Vierkantteile aufschlagen kann, um einen festen Preßsitz zwischen dem Zapfen und dem zugehörigen Verbindungselement zu erzeugen. Nachteil bei diesem System ist, daß es einerseits nicht ohne Werkzeuge möglich ist, das Regal zusammenzubauen, und andererseits es kaum möglich ist, hergestellte Verbindungen wieder zu lösen.

Der Erfindung liegt die Aufgabe zugrunde, ein Regalbausystem der eingangs genannten Art so auszugestalten, daß es mit einfachen Mitteln leicht zusammengebaut werden kann, eine feste Verbindung zwischen den einzelnen Elementen ermöglicht und dennoch ohne weiteres wieder auseinandergenommen werden kann.

Erreicht wird dies dadurch, daß ein Regalbausystem der eingangs genannten Art so ausgebildet wird, daß die Zapfen der Knotenpunktelemente als Zylinder mit einem Durchmesser ausgebildet sind, der wenig größer als das Innenmaß der Hohlprofilteile ist, und an den Zapfen mindestens zwei, vorzugsweise vier diametral gegenüberliegende und über den Umfang gleichmäßig verteilte Abflachungen ausgebildet sind, die paarweise zueinander einen Abstand haben, der wenig kleiner als das Innenmaß der Hohlprofilteile ist.

Die Abflachungen an den Zapfen sind paarweise so zueinander dimensioniert, daß man das Hohlprofil eines Verbindungselementes ohne weiteres auf einen Zapfen aufstecken kann. Die eigentliche, feste Verbindung zwischen dem Zapfen des Knotenelementes und dem Verbindungsstab wird dann dadurch erzeugt, daß das Hohlprofil relativ zum Zapfen um etwa 45° gedreht wird. In dieser Lage befinden sich nicht mehr die Abflachungen in der Nähe der Innenwandungen des Hohlprofilteiles sondern die abgerundeten Teile des Zapfens, die eine Abmessung haben, die etwas größer ist, als das Kanteninnenmaß des Hohlprofilteils. Es entsteht auf diese Art und Weise ein Preßsitz, der jedenfalls durch die üblichen Zugbeanspruchungen nicht gelöst werden kann. Lediglich durch Zurückdrehen des Hohlprofilteiles in bezug auf das Knotenelement kann die Verbindung dieser beiden Teile wieder voneinander gelöst werden.

Die Eckflächen der Knotenpunktelemente können so ausgerichtet werden, daß sie in der Preßsitzlage mit den nach oben weisenden Flächen der Verbindungsstäbe fluchten, so daß eine in einer Ebene liegende Auflagefläche für Regalfachteile erzeugt wird.

Bei den Knotenelementen können, je nach Verwendungszweck, unterschiedlich viel Zapfen vorgesehen sein. Im einfachsten Fall bei einem Regal, das sich auf rechten Winkeln aufbaut, ist das kleinste Element mit zwei Zapfen ausgebildet, die in einer Ebene liegen und im Winkel von 90° zueinander stehen. Das nächstfolgende Element hat die Gestalt eines räumlichen Dreibeins mit 90°-Winkeln zwischen den Zapfen. Entsprechend kann es für gewisse Anwendungszwecke Verbindungselemente mit vier, fünf oder sechs zueinander paarweise orthogonal ausgerichteten Zapfen geben.

Die Knotenelemente eines Regalbausystems gemäß der Erfindung müssen nicht notwendiger Weise auf rechten Winkeln basieren, eine räumliche Ausbildung mit Winkeln auf 120° ist ebenfalls denkbar.

Die stabförmigen Verbindungselemente müssen nicht notwendiger Weise über ihre Gesamtlänge Hohlprofilteile sein. Es genügt, wenn diese an ihren Endteilen mit Kastenhohlprofilen ausgestaltet sind.

Als Material kommen Metalle sowohl für die Knotenelemente als auch für die Hohlprofile in Frage, aber auch ebenso gut Kunststoff. Bei den Hohlprofilteilen kann es sich bevorzugter Weise um Ziehprofilteile aus Metall handeln. Für die Knotenelemente werden Metall-Druckgußverfahren zur Herstellung bevorzugt.

Die Erfindung wird nachstehend anhand der Zeichnung beispielsweise erläutert.
- Fig. 1: zeigt eine schaubildliche Darstellung eines Knotenpunktelementes zusammen mit einem stabförmigen Verbindungselement.
- Fig. 2: zeigt eine Querschnittsansicht durch einen der Zapfen des Knotenpunktelementes.

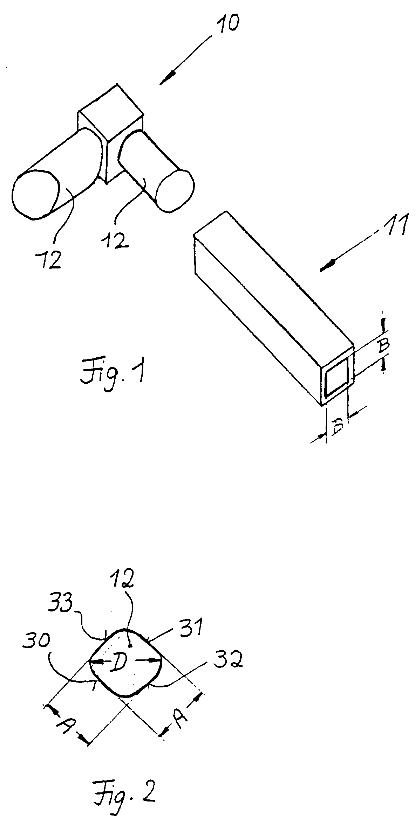

In der Zeichnung ist mit 10 ein Knotenpunktelement gezeigt, das (zur Vereinfachung der zeichnerischen Darstellung) lediglich mit zwei im Winkel von 90° zueinander vorstehenden Zapfen 12 ausgebildet ist. Der Querschnitt durch einen Zapfen nach Fig. 2 läßt erkennen, daß der Zapfen zunächst einmal aus einem zylindrischen Teil hervorgegangen ist, der einen Durchmesser D hatte. Sodann sind an dem Zapfen Abflachungen 30, 31 und 32, 33 ausgebildet worden, die paarweise einander diametral gegenüberliegen und zueinander einen Abstand A haben.

In Fig. 1 ist mit 11 ein stabförmiges Element bezeichnet, welches eine große Länge im Vergleich zum Knotenpunktelement hat. Es kommt hier auf den Willen des Kunden an, der sich Stäbe in der von ihm gewünschten Länge zuschneiden lassen kann. Das Hohlkastenprofil 11 ist ein dünnwandiges Profilteil (etwa 1 mm oder weniger), wobei die vier Innenflächen sich paarweise gegenüberliegen und jeweils Innenabstände von B haben.

Gemäß der Erfindung ist D wenig größer als B und B wenig größer als A. Auf diese Art und Weise ist es ohne weiteres möglich, daß Element 11 auf einen Zapfen 12 so aufzuschieben, daß die Innenwände des Stabes 11 zunächst parallel zu den Abflachungen 30-33 liegen. Führt man eine 45°-Drehung zwischen dem Stab 11 und dem Zapfen 12 durch, so gelangen die vom Zylinder her verbliebenen Teile 30, 31, 32 und 33 des Zapfens 12 mit den Innenwandungsflächen des stabförmigen Elementes 11 in Preßsitzeingriff.

Als Beispiel für die Größen D, B und A seien genannt:
D ∼ 17,0 mm
B ∼ 16,0 mm
A ∼ 15,0 mm.

Nach einer bevorzugten Ausführungsform des Regalbausystems gemäß der Erfindung werden die Hohlprofilteile aus Metallblechstreifen hergestellt, gekantet und längsverschweißt, wobei nach einer besonders bevorzugten Ausführungsform die Schweißnaht nicht im Bereich einer Seitenfläche, sondern im Kantenbereich liegt. Dadurch befinden sich die innenliegenden Schweißnahtreste in der Ecke des Profils, wo sie ohne jeden Einfluß auf die Preßsitzverbindungen mit den Knotenelementen sind, so daß ein insgesamt gleichmäßigeres äußeres Aussehen der Hohlprofilteile erreicht werden kann.

## Patentansprüche

1. Regalbausystem, aufweisend stabförmige Verbindungselemente, die mindestens im Bereich ihrer Enden mit je einem Quadrat-Hohlprofilteil ausgebildet sind, und aufweisend Knotenpunktelemente mit zwei, drei, vier, fünf oder sechs voneinander wegstehenden Zapfen, die in den Hohprofilteilen zwecks Bildung von Regal-Raumgittern Aufnahme finden, dadurch gekennzeichnet, daß die Zapfen (12) der Knotenpunktelemente (10) als Zylinder mit einem Außendurchmesser (D) ausgebildet sind, der wenig größer als das Innenmaß (B) der Hohlprofilteile (11) ist, und daß an den Zapfen (12) vier diametral gegenüberliegende und über den Umfang gleichmäßig verteilte Abflachungen (30-34) ausgebildet sind, die paarweise zueinander einen Abstand (A) haben, der wenig kleiner als das Innenmaß (B) der Hohlprofilteile ist.

2. Regalbausystem nach Anspruch 1, dadurch gekennzeichnet, daß die Hohlprofilteile (11) durch Längsverschweißen von Blechstreifen gebildet sind, wobei die Verschweißung vorzugsweise im Eckbereich des Hohlprofilteiles durchgeführt wird.
